# EUROPEAN PATENT SPECIFICATION

(11) **EP 4 459 735 B1**
(45) Date of publication and mention of the grant of the patent: **16.09.2026**
(21) Application number: 23877532.4
(22) Date of filing: 19.09.2023
(51) Int. Cl.: H01M 4/70, H01M 10/0587, H01M 10/04

(54) **JELLY-ROLL TYPE ELECTRODE ASSEMBLY AND SECONDARY BATTERY COMPRISING SAME**
JELLY-ROLL-ELEKTRODENANORDNUNG UND SEKUNDÄRBATTERIE DAMIT
ENSEMBLE ÉLECTRODE DE TYPE ROULÉ ET BATTERIE SECONDAIRE LE COMPRENANT

(30) Priority: 12.10.2022 KR 20220130820
(43) Date of publication of application: 06.11.2024
(73) Proprietor: LG Energy Solution, Ltd., Seoul 07335 (KR)
(72) Inventor: JEONG, Seyoung, Daejeon 34122 (KR)
(74) Representative: Goddar, Heinz J.
(86) International application number: PCT/KR2023/014143
(87) International publication number: WO 2024/080604

(56) References cited:
- EP-A1- 4 080 644
- JP-A- H0 676 857
- KR-A- 20040 059 303
- KR-A- 20180 080 908
- KR-A- 20220 016 554
- KR-A- 20220 016 554
- KR-B1- 101 741 302
- KR-B1- 101 741 302
- US-A1- 2004 126 648

## Description

### [Technical Field]

The present invention relates to a jelly-roll type electrode assembly and a secondary battery including the same, and more particularly, to a jelly-roll type electrode assembly having an outer circumference tab structure and a cylindrical secondary battery including the same. The present application claims priority to and the benefit of Korean Patent Application No. 10-2022-0130820 filed with the Korean Intellectual Property Office on October 12, 2022,

### [Background Art]

For a cylindrical battery, a jelly-roll type electrode assembly is manufactured by rolling a long electrode having a prescribed width into a roll form. A cylindrical battery manufactured by inserting such a jelly-roll type electrode assembly into a battery case is subjected to repeating contraction/expansion of the electrode during charging and discharging, and stress due to a step is formed according to a structure of the jelly-roll.

In particular, in the case of a jelly-roll type electrode assembly having a negative electrode-outermost structure, the outermost negative electrode covers an end portion of a positive electrode, and a space next to the free edge of the positive electrode is left empty due to a thickness of the positive electrode. In this case, the step due to the thickness of the positive electrode forms stress in the negative electrode, and the stress may be concentrated on a surface opposite to a surface of the negative electrode facing the positive electrode during charging and discharging, thereby causing an outer crack in the negative electrode.

In order to prevent the crack on the outer side of the negative electrode, it is necessary to develop a technology capable of addressing the stress concentration of the negative electrode in the corresponding region.

EP 4 080 644 A1 discloses an electrode assembly including a positive electrode; a negative electrode; and a separator interposed between the positive electrode and the negative electrode, wherein the positive electrode includes a positive electrode active material layer formed on a positive electrode current collector, and the negative electrode includes a negative electrode active material layer formed on a negative electrode current collector, wherein a non-coated part is formed at an edge of the negative electrode current collector, and wherein a disconnection preventing layer is formed as the negative electrode current collector, which is extended to an external side of the non-coated part, is horizontally bent.

US 2004/126648 A1 discloses an electrode unit of a secondary battery prevents deviated winding of electrode plates of the electrode unit and prevents the position of an electrode tab from shifting during winding and a secondary battery having the electrode unit. The secondary battery includes an electrode unit having a first electrode plate having a first electrode uncoated portion on at least one side of a first electrode collector coated with at least a first electrode active material, a second electrode plate having a second electrode uncoated portion on at least one side of a second electrode collector coated with at least a second electrode active material, a separator interposed between the first electrode plate and the second electrode plate, and a case accommodating the electrode unit to be sealed and having a terminal portion electrically connected to the electrode unit.

KR 101741302 B1 discloses a secondary battery capable of preventing cracking of an anode foil portion of a cylindrical-type battery. The secondary battery includes a cathode portion of an electrode assembly; a first anode foil portion disposed on one side of the cathode portion, the first anode foil portion having a first uncoated portion on at least one of both surfaces on which an active material is not applied; a second anode foil portion disposed on the other side of the cathode portion, the second anode foil portion having a second uncoated portion on at least one of both surfaces on which an active material is not applied; a first protective member provided on the first uncoated portion; and a second protective member provided on the second uncoated portion.

### [Detailed Description of the Invention]

### [Technical Problem]

The present invention has been made in an effort to provide a jelly-roll type electrode assembly whose design has been changed, and a secondary battery including the same.

However, the problem to be solved by the present invention is not limited to the above-mentioned problem, and other problems not mentioned will be apparently understood by one skilled in the art from the following description.

### [Technical Solution]

The invention is defined by the independent claims. Advantageous embodiments are subject to the dependent claims.

An exemplary embodiment of the present invention provides a jelly-roll type electrode assembly in which a first electrode, a separator, and a second electrode are stacked and wound, wherein the second electrode includes a second electrode current collector; and a second electrode active material layer provided on at least one surface of the second electrode current collector, wherein the first electrode includes a first electrode current collector; a first electrode active material layer provided on at least one surface of the first electrode current collector; a disconnection prevention portion provided on a surface of the first electrode current collector opposite to a surface facing a longitudinal end portion of the second electrode; and a weld portion electrically connecting the first electrode current collector and the disconnection prevention portion, wherein the disconnection prevention portion includes the weld portion electrically connected to the first electrode current collector, and wherein both longitudinal end portions of the disconnection prevention portion do not coincide with the longitudinal end portion of the second electrode. The first electrode further comprises a first electrode tab provided at a longitudinal end portion of the first electrode. The disconnection prevention portion is provided between a longitudinal end portion of the first electrode active material layer and the first electrode tab (50), and the first electrode tab is provided on the surface of the first electrode current collector opposite to the surface facing the longitudinal end portion of the second electrode

Another exemplary embodiment of the present invention provides a secondary battery including the jelly-roll type electrode assembly described above; and a battery case for accommodating the electrode assembly.

### [Advantageous Effects]

The jelly-roll type electrode assembly and the secondary battery including the same according to an exemplary embodiment of the present invention includes the disconnection prevention portion, whereby it is possible to prevent crack and deformation of the electrode assembly due to stress concentration on the outermost negative electrode.

In addition, in the jelly-roll type electrode assembly and the secondary battery including the same according to an exemplary embodiment of the present invention, the disconnection prevention portion is electrically connected to the electrode current collector via the weld portion to provide an additional conductive passage, so it is possible to suppress an increase in resistance and improve battery stability even in the event of disconnection.

In addition, the jelly-roll type electrode assembly and the secondary battery including the same according to an exemplary embodiment of the present invention can prevent local problems such as reduction in roundness and lithium precipitation due to formation of additional steps by adjusting positions of the disconnection prevention portion and the weld portion, and can minimize occurrence of additional cracks and deformation of the electrode assembly due to formation of fixed points.

The effects of the present invention are not limited to the foregoing effects, and effects not mentioned will be apparently understood by one skilled in the art from the present specification and accompanying drawings.

### [Brief Description of Drawings]

FIGS. 1 and 2 show a jelly-roll type electrode assembly including a disconnection prevention portion according to an exemplary embodiment of the present invention.
FIG. 3 is an image of a jelly-roll type electrode assembly implemented according to an exemplary embodiment of the present invention.
FIG. 4 schematically shows a step portion of a jelly-roll type electrode assembly according to an exemplary embodiment of the present invention.
FIG. 5 is a reference drawing showing a jelly-roll type electrode assembly.

### <Explanation of Reference Numerals and Symbols>

1000: jelly-roll type electrode assembly
100, 100': first electrode
101: first electrode current collector
102, 103: first electrode active material layer
110: longitudinal end portion of first electrode
20, 20': separator
300: second electrode
301: second electrode current collector
302, 303: second electrode active material layer
310: longitudinal end portion of second electrode
40: disconnection prevention portion
W: weld portion
50: first electrode tab
60: step portion
70: disconnection prevention tape
L1: separation distance between disconnection prevention portion and first electrode active material layer
L2: length, in longitudinal direction, of disconnection prevention portion
L3: separation distance between disconnection prevention portion and first electrode tab
L4, L8: separation distance between weld portion and longitudinal end portion of disconnection prevention portion
L5, L7: separation distance between weld portion and longitudinal end portion of single-side coated portion
L6: length, in longitudinal direction, of single-side coated portion
Lh: length, in winding axis direction, of disconnection prevention portion

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

Hereinafter, the present invention will be described in detail with reference to the drawings. However, it should be noted that the drawings are provided for illustrating the present invention, and the scope of the present invention is not limited by the drawings.

An exemplary embodiment of the present invention provides a jelly-roll type electrode assembly in which a first electrode, a separator, and a second electrode are stacked and wound, wherein the second electrode includes a second electrode current collector; and a second electrode active material layer provided on at least one surface of the second electrode current collector, wherein the first electrode includes a first electrode current collector; a first electrode active material layer provided on at least one surface of the first electrode current collector; a disconnection prevention portion provided on a surface of the first electrode current collector opposite to a surface facing a longitudinal end portion of the second electrode; and a weld portion electrically connecting the first electrode current collector and the disconnection prevention portion, and wherein both longitudinal end portions of the disconnection prevention portion do not coincide with the longitudinal end portion of the second electrode. The jelly-roll type electrode assembly and the secondary battery including the same according to an exemplary embodiment of the present invention includes the disconnection prevention portion, whereby it is possible to prevent crack and deformation of the electrode assembly due to stress concentration on the outermost negative electrode. In addition, since the disconnection prevention portion is electrically connected to the electrode current collector via the weld portion to provide an additional conductive passage, it is possible to suppress an increase in resistance and improve battery stability even in the event of disconnection.

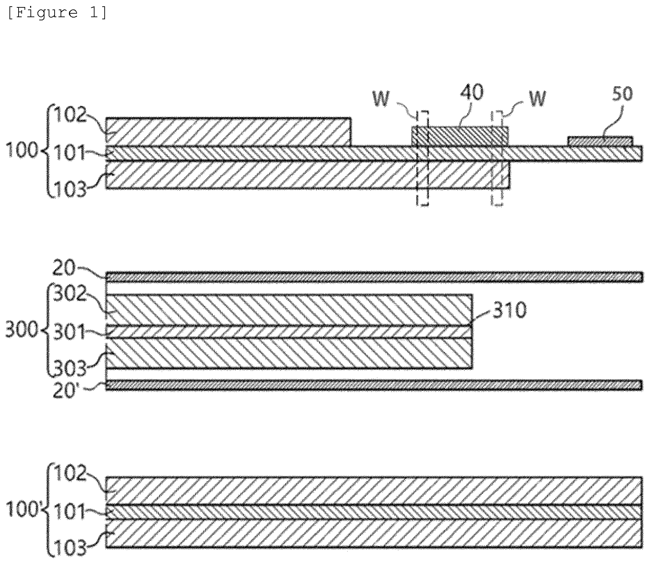

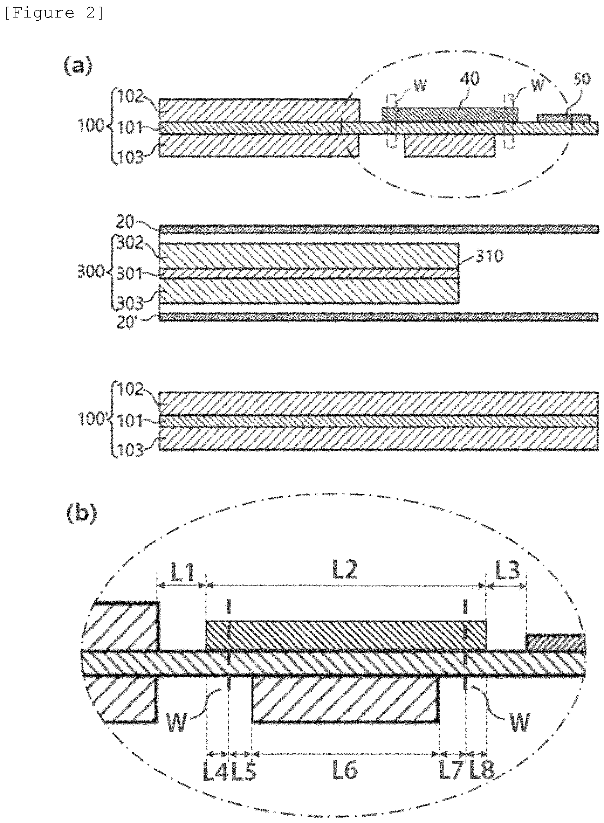

FIGS. 1 and 2 show a jelly-roll type electrode assembly including a disconnection prevention portion according to an exemplary embodiment of the present invention. Specifically, FIG. 1 is a view showing an exemplary embodiment including a weld portion including a first electrode active material layer on a surface of a first electrode current collector facing a longitudinal end portion of a second electrode, and FIG. 2 is a view showing an exemplary embodiment including a weld portion that does not include the first electrode active material layer on the surface of the first electrode current collector facing the longitudinal end portion of the second electrode.

Referring to FIGS. 1 and 2, a jelly-roll type electrode assembly according to an exemplary embodiment of the present invention is a jelly-roll type electrode assembly in which a first electrode 100, 100', a separator 20, 20', and a second electrode 300 are stacked and wound, wherein the second electrode 300 may include a second electrode current collector 301; and a second electrode active material layer 302, 303 provided on at least one surface of the second electrode current collector 301, wherein the first electrode 100 may include a first electrode current collector 101; a first electrode active material layer 102, 103 provided on at least one surface of the first electrode current collector 101; a disconnection prevention portion 40 provided on a surface of the first electrode current collector 101 opposite to a surface facing a longitudinal end portion 310 of the second electrode; and a weld portion W electrically connecting the first electrode current collector 101 and the disconnection prevention portion 40, wherein the disconnection prevention portion 40 may include the weld portion W electrically connected to the first electrode current collector 101, and wherein both longitudinal end portions of the disconnection prevention portion 40 may not coincide with the longitudinal end portion 310 of the second electrode. As used herein, the 'longitudinal direction' may refer to a longitudinal direction of the first electrode, the separator, the second electrode, and the electrode assembly in which they are stacked before winding, i.e., a direction perpendicular to a winding axis direction of the electrode assembly after winding, and the meaning of 'longitudinal end portions coincide' may include a case where each end portion is located at exactly the same position based on a cross section perpendicular to the longitudinal direction of the electrode assembly, and a case where errors in processing and measurement exist.

According to an exemplary embodiment of the present invention, the disconnection prevention portion may be made of a conductive material. Specifically, the disconnection prevention portion may be made of any one selected from copper, stainless steel, aluminum, nickel, titanium, and fired carbon. More specifically, the disconnection prevention portion may be made of copper, stainless steel, or aluminum, and may be surface-treated with carbon, nickel, titanium, silver, or the like. For example, transition metals that adsorb carbon well, such as copper and nickel, may be used. When the disconnection prevention portion is made of the conductive material described above, the disconnection prevention portion is electrically connected to the electrode current collector via the weld portion to provide an additional conductive passage, whereby it is possible to suppress an increase in resistance and improve battery stability even in the event of disconnection of the electrode current collector.

According to an exemplary embodiment of the present invention, the disconnection prevention portion may be made of the same material as that of the first electrode current collector. Specifically, the first electrode current collector may be conductive without inducing chemical changes in the battery, as described below, and the disconnection prevention portion may be made of the same material as that of the first electrode current collector. For example, the first electrode current collector and the disconnection prevention portion may each be a copper foil (Cu foil). A point where the first electrode current collector and the disconnection prevention portion are welded may act as a fixing point. Therefore, if the first electrode current collector and the disconnection prevention portion are made of different types of materials, a portion fixed by the fixing point and a portion not fixed by the fixing point may undergo different degrees of deformation or volume change during charging and discharging, and distortion of the first electrode current collector may occur due to partial deformation of the electrode assembly. When the disconnection prevention portion made of the same material as that of the first electrode current collector is used, the elongation rates of the first electrode current collector and the disconnection prevention portion are similar, so the degrees of deformation or volume change during charging and discharging may be similar. Therefore, the occurrence of distortion of the electrode current collector due to the fixing point can be reduced and problems such as corrosion that may occur when welding different materials can be prevented. In addition, since the material used for the first electrode current collector can be used, it can be easy to provide the disconnection prevention portion without additional production facilities.

According to an exemplary embodiment of the present invention, both longitudinal end portions of the disconnection prevention portion may not coincide with a longitudinal end portion of the second electrode. Specifically, the longitudinal end portion of the second electrode may be located between both longitudinal end portions of the disconnection prevention portion. With this, a region of the first electrode current collector corresponding to the longitudinal end portion of the second electrode, particularly a surface opposite to a surface facing the longitudinal end portion of the second electrode can be efficiently complemented, and crack and deformation due to stress concentration on the outermost first electrode can be prevented.

According to an exemplary embodiment of the present invention, both longitudinal end portions of the disconnection prevention portion may be spaced apart from the longitudinal end portion of the second electrode by 2 mm or more and 10 mm or less. Specifically, both longitudinal end portions of the disconnection prevention portion may be spaced apart from the longitudinal end portion of the second electrode by 3 mm or more or 5 mm or more and 9 mm or less or 7 mm or less. When both longitudinal end portions of the disconnection prevention portion have a separation distance within the above-described range from the longitudinal end portion of the second electrode, a region of the first electrode current collector corresponding to the longitudinal end portion of the second electrode, particularly a surface opposite to a surface facing the longitudinal end portion of the second electrode can be efficiently complemented, and crack and deformation due to stress concentration on the outermost first electrode can be prevented. In addition, a region required to weld the disconnection prevention portion can be sufficiently secured.

According to an exemplary embodiment of the present invention, the disconnection prevention portion may be provided on a surface of the first electrode current collector opposite to a surface facing the longitudinal end portion of the second electrode. Specifically, the disconnection prevention portion may be provided spaced apart from a longitudinal end portion of the first electrode active material layer on a surface of the first electrode current collector opposite to a surface facing the longitudinal end portion of the second electrode. That is, the disconnection prevention portion may be provided on a first electrode uncoated portion of the first electrode current collector where the first electrode active material layer is not provided. When the disconnection prevention portion is provided on the surface opposite to the surface facing the longitudinal end portion of the second electrode, a problem of additional step formation caused by a thickness of the disconnection prevention portion can be prevented, and asymmetric formation of the electrode assembly can be minimized to improve roundness. Accordingly, damage to a lower end portion of the electrode assembly can be minimized during a post-process of inserting the electrode assembly into a battery case. Furthermore, occurrence of local problems such as damage to the electrode assembly due to an increase in pressure in a specific part when a volume of the electrode assembly changes due to a charging and discharging cycle, a side reaction due to lack of an electrolyte and lithium precipitation can be reduced. Here, the roundness may refer to a value obtained by subtracting the minimum value of the outer diameter from the maximum value of the outer diameter of the jelly-roll type electrode assembly.

According to an exemplary embodiment of the present invention, the first electrode may further include a first electrode tab provided at a longitudinal end portion of the first electrode, and the disconnection prevention portion may be formed between the longitudinal end portion of the first electrode active material layer and the first electrode tab. The first electrode tab may be welded and electrically connected to a battery case for accommodating the electrode assembly on the outermost side of the jelly-roll type electrode assembly, and may serve as a fixing point for the electrode assembly during welding. When the electrode assembly further includes the first electrode tab on the outermost side, the disconnection prevention portion is provided between the longitudinal end portion of the first electrode active material layer and the first electrode tab, thereby reducing occurrence of additional distortion of the electrode current collector due to a plurality of fixing points.

According to an exemplary embodiment of the present invention, the first electrode tab may be provided on the surface of the first electrode current collector opposite to the surface facing the longitudinal end portion of the second electrode. That is, the first electrode tab may be provided on the same surface as the disconnection prevention portion provided on the first electrode current collector, and formation of steps due to the thicknesses of the first electrode tab and the disconnection prevention portion may be minimized. With this, a problem of additional step formation that may be caused when the first electrode tab is provided on the surface of the first electrode facing the longitudinal end portion of the second electrode can be prevented, and asymmetric formation of the electrode assembly can be minimized to improve roundness. Accordingly, damage to a lower end portion of the electrode assembly can be minimized during a post-process of inserting the electrode assembly into a battery case. Furthermore, occurrence of local problems such as damage to the electrode assembly due to an increase in pressure in a specific part when a volume of the electrode assembly changes due to a charging and discharging cycle, a side reaction due to lack of an electrolyte and lithium precipitation can be reduced. In addition, welding between the first electrode tab located at the outermost side of the electrode assembly and the battery case may be more easily performed, and the electrical connection may be more stable.

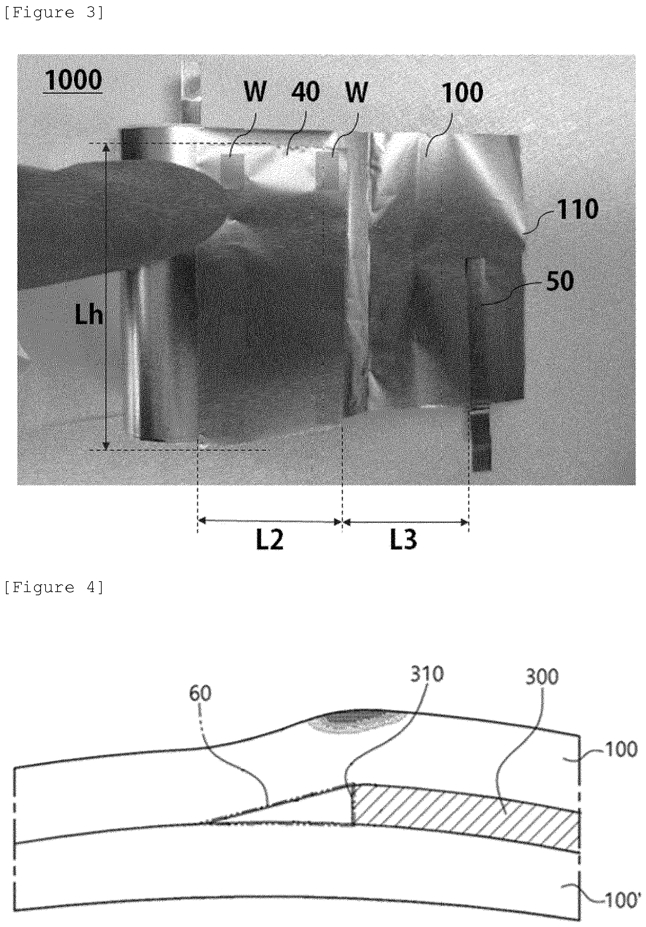

FIG. 3 is an image of a jelly-roll type electrode assembly implemented according to an exemplary embodiment of the present invention.

According to an exemplary embodiment of the present invention, a length, in a winding axis direction, of the disconnection prevention portion may be 50% or more and 100% or less based on a length, in the winding axis direction, of the first electrode current collector. Specifically, referring to FIG. 3, a length Lh, in a winding axis direction, of the disconnection prevention portion may be 55% or more, 60% or more or 65% or more based on 100% of a length, in the winding axis direction, of the first electrode current collector, and the length Lh, in the winding axis direction, of the disconnection prevention portion may be 95% or less, 90% or less or 85% or less based on 100% of the length, in the winding axis direction, of the first electrode current collector. When the length, in the winding axis direction, of the disconnection prevention portion satisfies the range described above, a region of the first electrode current collector corresponding to the longitudinal end portion of the second electrode, particularly a surface opposite to a surface facing the longitudinal end portion of the second electrode can be efficiently complemented, and the occurrence of problems such as cracks during charging and discharging can be reduced to ensure the battery stability.

According to an exemplary embodiment of the present invention, the length, in the longitudinal direction, of the disconnection prevention portion may be 25 mm or longer and 400 mm or less. Specifically, referring to FIG. 2, the length L2, in the longitudinal direction, of the disconnection prevention portion may be 30 mm or longer, 35 mm or longer, or 40 mm or longer, and the length L2, in the longitudinal direction, of the disconnection prevention portion may be 395 mm or less, 390 mm or less, or 385 mm or less. When the length, in the longitudinal direction, of the disconnection prevention portion satisfies the range described above, a region of the first electrode current collector corresponding to the longitudinal end portion of the second electrode, particularly a surface opposite to a surface facing the longitudinal end portion of the second electrode can be efficiently complemented, and the occurrence of problems such as cracks during charging and discharging can be reduced to ensure the battery stability.

According to an exemplary embodiment of the present invention, the separation distance between one longitudinal end portion of the disconnection prevention portion and a longitudinal end portion of the first electrode active material layer provided on one surface of the first electrode current collector may be 5 mm or longer and 100 mm or less. Specifically, referring to FIG. 2, the separation distance L1 between one longitudinal end portion of the disconnection prevention portion 40 and a longitudinal end portion of the first electrode active material layer 102 provided on one surface of the first electrode current collector 101 may be 10 mm or longer, 15 mm or longer, or 20 mm or longer, and the separation distance L1 between one longitudinal end portion of the disconnection prevention portion 40 and a longitudinal end portion of the first electrode active material layer 102 provided on one surface of the first electrode current collector 101 may be 95 mm or less, 90 mm or less, or 85 mm or less. When the separation distance L1 between one longitudinal end portion of the disconnection prevention portion and a longitudinal end portion of the first electrode active material layer provided on one surface of the first electrode current collector satisfies the range described above, a weld space where the first electrode is not damaged can be ensured, and the formation of an additional step in relation to the first electrode active material layer can be minimized while providing the disconnection prevention portion in the jelly-roll type electrode assembly.

According to an exemplary embodiment of the present invention, the separation distance between one longitudinal end portion of the disconnection prevention portion and the first electrode tab provided on one surface of the first electrode current collector may be 5 mm or longer and 100 mm or less. Specifically, referring to FIG. 2, the separation distance L3 between one longitudinal end portion of the disconnection prevention portion 40 and the first electrode tab 50 provided on one surface of the first electrode current collector 101 may be 10 mm or longer, 15 mm or longer, or 20 mm or longer, and the separation distance L3 between one longitudinal end portion of the disconnection prevention portion 40 and the first electrode tab 50 provided on one surface of the first electrode current collector 101 may be 95 mm or less, 90 mm or less, or 85 mm or less. When the separation distance L3 between one longitudinal end portion of the disconnection prevention portion and the first electrode tab provided on one surface of the first electrode current collector satisfies the range described above, the formation of an additional step in relation to the first electrode tab can be minimized while providing the disconnection prevention portion in the jelly-roll type electrode assembly, and an increase in resistance due to additional welding of the first electrode tab and the disconnection prevention portion during welding can be prevented.

According to an exemplary embodiment of the present invention, the first electrode may include a weld portion electrically connecting the first electrode current collector and the disconnection prevention portion. Specifically, referring to FIGS. 1 and 2, the weld portion W is a region where welding is performed in order to electrically connect the first electrode current collector 101 and the disconnection prevention portion 40, and may refer to a region including a cross section perpendicular to the longitudinal direction of the first electrode. More specifically, the weld portion may include the disconnection prevention portion and the first electrode current collector; or the disconnection prevention portion, the first electrode active material layer, and the first electrode current collector. In addition, the weld portion may be formed in a linear or spot shape depending on a welding method described below, and may have a predetermined length in the winding axis direction, a length in the longitudinal direction, and an area required for welding.

According to an exemplary embodiment of the present invention, the weld portion may be formed at each of both longitudinal end portions of the disconnection prevention portion, and may be formed at a predetermined distance apart from each of both end portions of the disconnection prevention portion. Specifically, referring to FIG. 2, a separation distance L4, L8 between the weld portion and each of both longitudinal end portions of the disconnection prevention portion may be 2 mm or less. When the separation distance between the weld portion and each of both longitudinal end portions of the disconnection prevention portion satisfies the range described above, it is possible to secure a region required for welding and to minimize defects due to folding of the disconnection prevention portion during the winding process.

According to an exemplary embodiment of the present invention, the weld portion may not overlap with the longitudinal end portion of the second electrode. Specifically, based on the longitudinal direction of the first electrode, the weld portion may be spaced apart from the longitudinal end portion of the second electrode by 1 mm or more and 8 mm or less. More specifically, the weld portion may be spaced apart from the longitudinal end portion of the second electrode by 1 mm or more or 3 mm or more, and 8 mm or less or 6 mm or less. When the weld portion has a separation distance within the above-described range from the longitudinal end portion of the second electrode, a region required to weld the disconnection prevention portion can be sufficiently secured, and a problem of additional step formation that may be caused when the weld portion overlaps the longitudinal end portion of the second electrode can be prevented.

According to an exemplary embodiment of the present invention, the weld portion may be formed in plural. Specifically, the weld portion may be formed in plural in order to minimize asymmetry due to the fixing point on the first electrode current collector. During charging and discharging, the first electrode current collector may undergo a change of volume due to repeating contraction and expansion, and the weld portion may act as a fixing point, causing distortion of the first electrode current collector. When the weld portion is formed in plural, it is possible to prevent the occurrence of a crack due to the formation of fixing point at a specific position and to secure a sufficient cross-sectional area of a conductive passage even in the event of disconnection, thereby preventing deterioration in electrochemical properties, such as a decrease in cycle efficiency due to an increase in resistance.

According to an exemplary embodiment of the present invention, the weld portion may be formed in plural, and the plurality of weld portions may be formed to be symmetrical to each other. Specifically, the plurality of weld portions may be formed to be symmetrical with respect to a longitudinal center of the disconnection prevention portion. That is, the separation distances L4, L8 between the weld portions and both longitudinal end portions of the disconnection prevention portion may be the same. Here, the longitudinal center of the disconnection prevention portion may refer to a point that is 1/2 of a length, in the longitudinal direction, of the disconnection prevention portion. Additionally, the plurality of weld portions may be formed to be symmetrical with respect to a center, in the winding axis direction, of the disconnection prevention portion. Here, the center, in the winding axis direction, of the disconnection prevention portion may refer to a point that is 1/2 of a length, in the winding axis direction, of the disconnection prevention portion. When the plurality of weld portions are formed to be symmetrical with respect to the center, in the longitudinal direction or in the winding axis direction, of the disconnection prevention portion, asymmetric formation of the disconnection prevention portion including the weld portions can be minimized, and the stress applying on both sides of the fixing point of the disconnection prevention portion is uniform, thereby minimizing distortion of the disconnection prevention portion.

According to an exemplary embodiment of the present invention, the weld portion may be formed in plural, and the longitudinal end portion of the second electrode may be located between the plurality of weld portions. Specifically, the weld portion may be formed in plurality at a distance apart from the longitudinal end portion of the second electrode by 1 mm or more and 8 mm or less so that the longitudinal end portion of the second electrode is located between the plurality of weld portions. With this, it is possible to effectively complement the surface opposite to the surface facing the longitudinal end portion of the second electrode and to minimize defects due to folding of the disconnection prevention portion during the winding process.

According to an exemplary embodiment of the present invention, the plurality of weld portions may be formed to be symmetrical with respect to the center, in the winding axis direction, of the first electrode current collector. Here, the center, in the winding axis direction, of the first electrode current collector may refer to a point that is 1/2 of a length, in the winding axis direction, of the first electrode current collector. When the plurality of weld portions are formed to be symmetrical with respect to the center, in the winding axis direction, of the first electrode current collector, asymmetric formation of the electrode assembly including the disconnection prevention portion can be minimized and roundness can be improved. Accordingly, damage to a lower end portion of the electrode assembly can be minimized during a post-process of inserting the electrode assembly into a battery case. Furthermore, occurrence of local problems such as damage to the electrode assembly due to an increase in pressure in a specific part when a volume of the electrode assembly changes due to a charging and discharging cycle, a side reaction due to lack of an electrolyte and lithium precipitation can be reduced.

According to an exemplary embodiment of the present invention, the welding portion may include the first electrode active material layer provided on the surface of the first electrode current collector facing the longitudinal end portion of the second electrode. Specifically, referring to FIG. 1, the first electrode current collector 101 may have the first electrode active material layer 103 on the surface facing the longitudinal end portion 310 of the second electrode, and the weld portion W may be formed in one longitudinal region of the first electrode including the disconnection prevention portion 40, the first electrode current collector 101, and the first electrode active material layer 103. When the weld portion W includes the first electrode active material layer 103, the weld portion may be suitable for ultrasonic welding or arc welding. Specifically, ultrasonic welding is a method of joining by applying highfrequency lateral vibration to a base material to diffuse atoms in a contact part by vibration energy, and can prevent thermal damage to the first electrode during welding because it does not involve heating. In addition, arc welding is a processing method of joining workpieces by melting the base material or material using arc discharge, and melts the disconnection prevention portion provided on one surface and also welds the first electrode current collector below, making it easy to perform single-side welding.

According to an exemplary embodiment of the present invention, the weld portion may not include the first electrode active material layer on the surface of the first electrode current collector facing the longitudinal end portion of the second electrode. Specifically, referring to (a) of FIG. 2, the first electrode current collector 101 may include a single-side coated portion having the first electrode active material layer 103 and an uncoated portion not provided with the first electrode active material layer on the surface facing the longitudinal end portion 310 of the second electrode, and the weld portion W may be formed in one region, in the longitudinal direction, of the first electrode including the disconnection prevention portion 40 and the uncoated portion of the first electrode current collector 101. In other words, the weld portion may further include an uncoated portion for welding on the opposite surface to the surface of the first electrode current collector provided with the disconnection prevention portion. When the weld portion W does not include the first electrode active material layer 103, the weld portion may be suitable for laser welding or resistance welding. Specifically, laser welding is a method of welding by heating a contact part with oxyacetylene or propane flame and then applying pressure, and a YAG laser or CO₂ laser may be used. In addition, resistance welding is a processing method of joining two materials through pressure without melting the materials. The resistance welding is a processing method that can obtain a strong joint by applying external pressure while heating materials through a high-current electric circuit. Since facilities that are usually used for tab welding can be used, additional facilities are not required, so economic efficiency can be ensured.

According to an exemplary embodiment of the present invention, the surface of the first electrode current collector facing the longitudinal end portion of the second electrode may be provided with a first electrode active material layer. Specifically, referring to FIG. 2, the first electrode current collector 101 may include a predetermined length of a single-side coated portion provided with the first electrode active material layer 103 on the surface facing the longitudinal end portion 310 of the second electrode.

According to an exemplary embodiment of the present invention, a length, in the longitudinal direction, of the single-side coated portion may be 20 mm or longer and 200 mm or less. Specifically, referring to FIG. 2, a length L6, in the longitudinal direction, of the single-side coated portion provided on the surface of the first electrode current collector 101 facing the longitudinal end portion 310 of the second electrode may be 25 mm or longer, 30 mm or longer, or 35 mm or longer, and the length L6, in the longitudinal direction, of the single-side coated portion may be 195 mm or less, 190 mm or less, or 185 mm or less. When the length L6, in the longitudinal direction, of the single-side coated portion satisfies the range described above, the formation of an additional step in relation to the first electrode active material layer can be minimized while providing the single-side coated portion in the jelly-roll type electrode assembly, and the design capacity of the cell and the internal space of the battery case can be kept constant. Here, the internal space of the battery case may refer to a volume obtained by excluding a volume of the jelly-roll type electrode assembly accommodated in the battery case and a volume of the electrolyte solution from an internal volume of the battery case.

According to an exemplary embodiment of the present invention, the weld portion may be formed at a predetermined distance apart from each of both longitudinal end portions of the single-side coated portion. Specifically, separation distances L5, L7 between the weld portions and both longitudinal end portions of the single-side coated portion may be 2 mm or longer. When the separation distance between the weld portion and each of both longitudinal end portions of the single-side coated portion satisfies the range described above, the formation of the weld portion by laser welding or resistance welding may be easier.

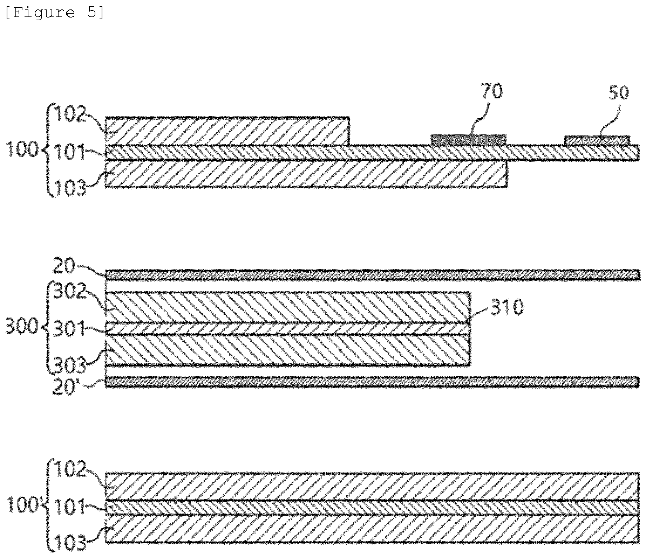

FIG. 4 schematically shows a step portion of a jelly-roll type electrode assembly according to an exemplary embodiment of the present invention, and FIG. 5 shows the jelly-roll type electrode assembly as a reference drawing.

Referring to FIGS. 4 and 5, the jelly-roll type electrode assembly according to an exemplary embodiment of the present invention may include a step portion 60, which is an empty space formed in a region where the first electrode 100 covers the longitudinal end portion 310 of the second electrode 300, and the disconnection prevention portion may be provided on a surface opposite to a surface facing the step portion 60, i.e., a surface of the first electrode current collector opposite to a surface facing the longitudinal end portion of the second electrode. Specifically, in the electrode assembly according to an exemplary embodiment of the present invention, the first electrode 100 located on the outermost side may extend longer than the longitudinal end portion 310 of the second electrode 300 and may be additionally wound to the outside of the electrode assembly, the step portion 60, which is a region where a step due to a thickness of the second electrode is formed, may be formed next to the longitudinal end portion 310 of the second electrode 300, and the disconnection prevention portion may be provided on a surface of the first electrode 100 opposite to a surface facing the step portion 60.

In other words, the jelly-roll type electrode assembly may form a stacked structure of the first electrode/separator/second electrode/separator/first electrode in a wound state. In this case, a length of the second electrode may be shorter than those of the remaining layers, and a region where a stacked structure of the first electrode/separator/empty space/separator/first electrode is formed, i.e., the step portion 60 may be present on the outermost side of the wound electrode assembly. In this case, during contraction and expansion due to charging and discharging, stress is concentrated on an inner peripheral surface of the first electrode 100 in contact with the longitudinal end portion 310 of the second electrode 300 located on the outermost side, so a crack due to stress concentration may be generated at a corresponding portion, which may cause problems such as an increase in resistance and battery stability in the event of disconnection. A disconnection prevention tape 70 may be attached on the opposite surface to the surface facing the step portion 60. However, if the disconnection prevention tape 70 does not have a sufficient thickness, the effect of preventing electrode cracks may be insufficient, and the effect of improving the problems such as an increase in resistance and overcharge stability may deteriorate in the event of disconnection. On the other hand, the electrode assembly according to the present invention is provided with the disconnection prevention portion 40 on the surface of the first electrode 100 opposite to the surface facing the step portion 60, and the disconnection prevention portion 40 includes the weld portion W electrically connected to the first electrode current collector 101, whereby cracks and deformation of the electrode assembly due to stress concentration on the outermost negative electrode can be prevented and an additional conductive passage is provided, so the increase in resistance can be suppressed and the battery stability can be improved, even in the event of disconnection.

According to an exemplary embodiment of the present invention, the first electrode may be a negative electrode, and the second electrode may be a positive electrode. Specifically, the first electrode, which is the outermost layer of the electrode assembly, may be a negative electrode, and the electrode assembly may have a negative electrode-outermost structure where a negative electrode/a separator/a positive electrode/a separator are wound. In other words, the jelly-roll type electrode assembly may have an outer circumferential tab structure where the negative electrode is exposed on the outermost side.

According to an exemplary embodiment of the present invention, the first electrode may include a first electrode current collector and a first electrode active material layer provided on the first electrode current collector. Specifically, the first electrode may include a first electrode current collector and a first electrode active material layer formed on one surface or both surfaces of the first electrode current collector and including a first electrode active material. In other words, the first electrode active material layer may be formed on a first electrode coated portion of the first electrode current collector, and a surface not provided with the first electrode active material layer may be expressed as a first electrode uncoated portion.

According to an exemplary embodiment of the present invention, the first electrode current collector may include a first electrode coated portion where the first electrode active material layer is formed and a first electrode uncoated portion where the first electrode active material layer is not formed, and may include a first electrode tab on the first electrode uncoated portion. Specifically, the first electrode current collector may include a first electrode uncoated portion and a first electrode tab formed on the first electrode uncoated portion. Accordingly, the manufactured electrode assembly may include one or more first electrode tabs.

According to an exemplary embodiment of the present invention, the first electrode active material layer may include a first electrode active material including one or more selected from the group consisting of a silicon-based material and a carbon-based material. In addition, the first electrode active material layer may further include a first electrode conductive material and a first electrode binder, and for the first electrode active material, the first electrode conductive material, and the first electrode binder, materials that are used as a negative electrode active material, a negative electrode conductive material, and a negative electrode binder in the art may be used without limitation.

According to an exemplary embodiment of the present invention, the first electrode current collector is not particularly limited as long as it has conductivity without inducing a chemical change in the battery. For example, for the first electrode current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the first electrode current collector.

A thickness of the first electrode current collector may be 8 µm or greater and 180 µm or less. However, the thickness of the first electrode current collector is not limited thereto.

According to an exemplary embodiment of the present invention, the first electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the first electrode conductive material is not particularly limited as long as it has conductivity without inducing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the second electrode may include a second electrode current collector and a second electrode active material layer provided on the second electrode current collector. Specifically, the second electrode may include a second electrode current collector and a second electrode active material layer formed on one surface or both surfaces of the second electrode current collector and including a second electrode active material. In other words, the second electrode active material layer may be formed on a second electrode coated portion of the second electrode current collector, and a surface not provided with the second electrode active material layer may be expressed as a second electrode uncoated portion.

According to an exemplary embodiment of the present invention, the second electrode current collector may include a second electrode coated portion where the second electrode active material layer is formed and a second electrode uncoated portion where the second electrode active material layer is not formed, and may include a second electrode tab on the second electrode uncoated portion. Specifically, the second electrode current collector may include a second electrode uncoated portion and a second electrode tab formed on the second electrode uncoated portion. Accordingly, the manufactured electrode assembly may include one or more second electrode tabs.

According to an exemplary embodiment of the present invention, the second electrode current collector is not particularly limited as long as it has conductivity without inducing a chemical change in the battery. Specifically, for the second electrode current collector, stainless steel, aluminum, nickel, titanium, fired carbon, aluminum or stainless steel each surface-treated with carbon, nickel, titanium, silver, or the like, or the like may be used.

In addition, the second electrode current collector may typically have a thickness of 60 µm or greater and 200 µm or less, and a surface of the second electrode current collector may be formed with microscopic irregularities to enhance an adhesive force of the second electrode active material. For example, the positive electrode current collector may be used in various forms such as a film, a sheet, a foil, a net, a porous body, a foamed body, and a non-woven fabric body.

According to an exemplary embodiment of the present invention, the second electrode active material may be a positive electrode active material that is typically used. Specifically, the second electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The second electrode may be Li metal.

According to an exemplary embodiment of the present invention, the second electrode active material layer may further include a second electrode conductive material and a second electrode binder. The second electrode conductive material is used to impart conductivity to the electrode, and can be used without particular limitation as long as it does not cause a chemical change and has electronic conductivity in a battery to be configured. Specific examples of the second electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

Additionally, the second electrode binder serves to improve adhesion between particles of the second electrode active material and an adhesive force between the second electrode active material and the second electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the longitudinal end portion of the second electrode may be such that the second electrode current collector and the second electrode active material layer form the longitudinal end portion at the same position. In other words, the longitudinal end portion of the second electrode may be a free edge. Here, the free edge shape may refer to a shape in which an end portion of the electrode active material layer and an end portion of the electrode current collector coincide with each other, and this may include not only a case where the longitudinal end portions completely coincide with each other with respect to a plane perpendicular to the longitudinal direction but also a case where there are errors in process and measurement. That is, the jelly-roll type electrode assembly according to an exemplary embodiment of the present invention may have a structure where the first electrode, which is the outermost layer, covers the longitudinal end portion of the second electrode having a free edge shape, and may include a step portion, which is an empty space formed in a region where the first electrode covers the second end portion of the second electrode.

Specifically, referring to FIGS. 4 and 5, the first electrode 100 is present on the outermost side of the electrode assembly 1000, and the first electrode 100 may have first electrode active material layers 102 and 103 provided on both surfaces of the first electrode current collector 101, respectively, and may include an uncoated portion (non-coating area). On the other hand, the second electrode 300 is present on the outermost side of the electrode assembly 1000, and the second electrode 300 has second electrode active material layers 302 and 303 provided on both surfaces of the second electrode current collector 301, respectively, but may not include an uncoated portion (non-coating area). In other words, the electrode assembly may have a free edge form where terminal ends of the second electrode current collector and the second electrode active material layer coincide with each other. That is, the longitudinal end portion 310 of the second electrode 300 may include the end portions of the second electrode active material layers 302 and 303 and the end portion of the second electrode current collector 301 having the same length in the longitudinal direction. The longitudinal end portion 310 of the second electrode 300 may be such that the end portions of the second electrode active material layers 302 and 303 and the end portion of the second electrode current collector 301 coincide with each other. On the other hand, according to an exemplary embodiment of the present invention, the uncoated portion present on a surface of the first electrode 100 opposite to a surface facing the longitudinal end portion 310 of the second electrode 300 may further include a disconnection prevention tape 70 attached to reduce a possibility of a short or generation of a crack due to stress concentration in the corresponding region.

According to an exemplary embodiment of the present invention, the jelly-roll type electrode assembly may further include a plurality of separators. For example, the jelly-roll type electrode assembly may have a structure where a first electrode/a separator/a second electrode/a separator are sequentially stacked. The separator serves to separate the first electrode and the second electrode and to provide a movement path of lithium ions, and any separator may be used without particular limitation as long as it is typically used as a separator in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. In addition, the separator may typically have a thickness of 10 µm or greater and 20 µm or less. A separator coated with a material including a ceramic component or a polymer material so as to secure heat resistance or mechanical strength may be used. A separator having a single layer or multilayer structure may be selectively used.

An exemplary embodiment of the present invention provides a secondary battery including the jelly-roll type electrode assembly, and a battery case for accommodating the electrode assembly, and the description for the jelly-roll type electrode assembly is the same as described above.

According to an exemplary embodiment of the present invention, the secondary battery may include a cap assembly coupled to an opening portion of the battery case, and the cap assembly may include a top cap, a safety vent, and a current cutoff element.

According to an exemplary embodiment of the present invention, the first electrode may be in direct contact with an inner surface of the battery case so that the battery case serves as a first electrode terminal.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

According to an exemplary embodiment of the present invention, the battery case may have a cylindrical shape. That is, since the jelly-roll type electrode assembly according to the present invention may be accommodated in the cylindrical battery case, and the battery case in which an assembly including a first electrode, a separator, and a second electrode, a cap assembly, and an electrolyte are included has a cylindrical shape, the manufactured secondary battery itself may have a cylindrical shape.

## Claims

1. A jelly-roll type electrode assembly (1000) in which a first electrode (100, 100'), a separator (20, 20'), and a second electrode (300) are stacked and wound,
wherein the second electrode (300) comprises a second electrode current collector (301); and a second electrode active material layer (302, 303) provided on at least one surface of the second electrode current collector (301),
wherein the first electrode (100, 100') comprises a first electrode current collector (101); a first electrode active material layer (102, 103) provided on at least one surface of the first electrode current collector (101);
a disconnection prevention portion (40) provided on a surface of the first electrode current collector (101) opposite to a surface facing a longitudinal end portion (310) of the second electrode (300); and a weld portion (W) electrically connecting the first electrode current collector (101) and the disconnection prevention portion (40), and
wherein both longitudinal end portions of the disconnection prevention portion (40) do not coincide with the longitudinal end portion (310) of the second electrode (300),
wherein the first electrode (100, 100') further comprises a first electrode tab (50) provided at a longitudinal end portion of the first electrode (100, 100'),
**characterized in that**
the disconnection prevention portion (40) is provided between a longitudinal end portion of the first electrode active material layer (102, 103) and the first electrode tab (50), and
the first electrode tab (50) is provided on the surface of the first electrode current collector (101) opposite to the surface facing the longitudinal end portion (310) of the second electrode (300).

2. The jelly-roll type electrode assembly (1000) of claim 1, wherein the disconnection prevention portion (40) is made of the same material as that of the first electrode current collector (101).

3. The jelly-roll type electrode assembly (1000) of claim 1, wherein the longitudinal end portion (310) of the second electrode (300) is located between both longitudinal end portions of the disconnection prevention portion (40).

4. The jelly-roll type electrode assembly (1000) of one of claims 1 to 3, wherein the disconnection prevention portion (40) is provided between a longitudinal end portion of the first electrode active material layer (103) provided on the surface of the first electrode current collector (101) opposite to the surface facing the longitudinal end portion (310) of the second electrode (300) and a first electrode tab (50) provided on the surface of the first electrode current collector (101) opposite to the surface facing the longitudinal end portion (310) of the second electrode (300).

5. The jelly-roll type electrode assembly (1000) of one of claims 1 to 3, wherein a length (L2), in a winding axis direction, of the disconnection prevention portion (40) is 50% or more and 100% or less based on a length, in the winding axis direction, of the first electrode current collector (101).

6. The jelly-roll type electrode assembly (1000) of one of claims 1 to 3, wherein the weld portion (W) does not overlap with the longitudinal end portion (310) of the second electrode (300).

7. The jelly-roll type electrode assembly (1000) one of claims 1 to 6, wherein a plurality of weld portions (W) electrically connects the first electrode current collector (101) and the disconnection prevention portion (40), and wherein the longitudinal end portion (310) of the second electrode (300) is located between the plurality of weld portions (W).

8. The jelly-roll type electrode assembly (1000) of one of claims 1 to 6, wherein a plurality of weld portions (W) electrically connects the first electrode current collector (101) and the disconnection prevention portion (40), and
wherein the plurality of weld portions (W) are formed to be symmetrical to each other.

9. The jelly-roll type electrode assembly (1000) of one of claims 1 to 6, wherein the weld portion (W) is formed at a longitudinal position where the first electrode active material layer (103) is provided on the surface of the first electrode current collector (101) facing the longitudinal end portion (310) of the second electrode (300).

10. The jelly-roll type electrode assembly (1000) of one of claims 1 to 6, wherein the weld portion (W) is formed at a longitudinal location where the first electrode active material layer (103) is not provided on the surface of the first electrode current collector (101) facing the longitudinal end portion (310) of the second electrode (300).

11. The jelly-roll type electrode assembly (1000) of one of claims 1 to 10, wherein the first electrode (100, 100') extends longer in the longitudinal direction than the longitudinal end portion (310) of the second electrode (300) and is additionally wound to an outside of the electrode assembly (1000).

12. The jelly-roll type electrode assembly (1000) of one of claims 1 to 11, wherein the longitudinal end portion (310) of the second electrode (300) is such that the second electrode current collector (301) and the second electrode active material layer (302, 303) form the longitudinal end portion at the same position.

13. The jelly-roll type electrode assembly (1000) of one of claims 1 to 12, wherein the first electrode (100, 100') is a negative electrode, and the second electrode (300) is a positive electrode.

14. A secondary battery comprising:
the jelly-roll type electrode assembly (1000) according to any one of claims 1 to 13; and
a battery case for accommodating the jelly-roll type electrode assembly (1000).

15. The secondary battery of claim 14, wherein the battery case has a cylindrical shape.

## Patentansprüche

1. Jelly-Roll-Elektrodenanordnung (1000), in der eine erste Elektrode (100, 100'), ein Separator (20, 20') und eine zweite Elektrode (300) gestapelt und gewickelt sind,
wobei die zweite Elektrode (300) einen zweiten Elektrodenstromkollektor (301) und eine zweite Elektrodenaktivmaterialschicht (302, 303), die auf mindestens einer Oberfläche des zweiten Elektrodenstromkollektors (301) bereitgestellt ist, umfasst,
wobei die erste Elektrode (100, 100') einen ersten Elektrodenstromkollektor (101) und eine erste Elektrodenaktivmaterialschicht (102, 103), die auf mindestens einer Oberfläche des ersten Elektrodenstromkollektors (101) bereitgestellt ist, umfasst;
einen Unterbrechungsverhinderungsabschnitt (40), der auf einer Oberfläche des ersten Elektrodenstromkollektors (101) gegenüber einer Oberfläche, die einem in Längsrichtung gelegenen Endabschnitt (310) der zweiten Elektrode (300) zugewandt ist, bereitgestellt ist; und einen Schweißabschnitt (W), der den ersten Elektrodenstromkollektor (101) und den Unterbrechungsverhinderungsabschnitt (40) elektrisch verbindet, und
wobei beide in Längsrichtung gelegenen Endabschnitte des Unterbrechungsverhinderungsabschnitts (40) nicht mit dem in Längsrichtung gelegenen Endabschnitt (310) der zweiten Elektrode (300) zusammenfallen,
wobei die erste Elektrode (100, 100') ferner eine erste Elektrodenlasche (50) umfasst, die an einem in Längsrichtung gelegenen Endabschnitt der ersten Elektrode (100, 100') bereitgestellt ist,
**dadurch gekennzeichnet, dass**
der Unterbrechungsverhinderungsabschnitt (40) zwischen einem in Längsrichtung gelegenen Endabschnitt der ersten Elektrodenaktivmaterialschicht (102, 103) und der ersten Elektrodenlasche (50) bereitgestellt ist und
die erste Elektrodenlasche (50) auf der Oberfläche des ersten Elektrodenstromkollektors (101) gegenüber der Oberfläche, die dem in Längsrichtung gelegenen Endabschnitt (310) der zweiten Elektrode (300) zugewandt ist, bereitgestellt ist.

2. Jelly-Roll-Elektrodenanordnung (1000) nach Anspruch 1, wobei der Unterbrechungsverhinderungsabschnitt (40) aus dem gleichen Material wie das des ersten Elektrodenstromkollektors (101) hergestellt ist.

3. Jelly-Roll-Elektrodenanordnung (1000) nach Anspruch 1, wobei der in Längsrichtung gelegene Endabschnitt (310) der zweiten Elektrode (300) zwischen beiden in Längsrichtung gelegenen Endabschnitten des Unterbrechungsverhinderungsabschnitts (40) angeordnet ist.

4. Jelly-Roll-Elektrodenanordnung (1000) nach einem der Ansprüche 1 bis 3, wobei der Unterbrechungsverhinderungsabschnitt (40) zwischen einem in Längsrichtung gelegenen Endabschnitt der ersten Elektrodenaktivmaterialschicht (103), die auf der Oberfläche des ersten Elektrodenstromkollektors (101) gegenüber der Oberfläche, die dem in Längsrichtung gelegenen Endabschnitt (310) der zweiten Elektrode (300) zugewandt ist bereitgestellt ist, und einer auf der Oberfläche des ersten Elektrodenstromkollektors (101) gegenüber der dem in Längsrichtung gelegenen Endabschnitt (310) der zweiten Elektrode (300) zugewandten Oberfläche bereitgestellten ersten Elektrodenlasche (50), bereitgestellt ist.

5. Jelly-Roll-Elektrodenanordnung (1000) nach einem der Ansprüche 1 bis 3, wobei eine Länge (L2), in einer Wicklungsachsenrichtung, des Unterbrechungsverhinderungsabschnitts (40) 50 % oder mehr und 100 % oder weniger, basierend auf einer Länge, in der Wicklungsachsenrichtung, des ersten Elektrodenstromkollektors (101), beträgt.

6. Jelly-Roll-Elektrodenanordnung (1000) nach einem der Ansprüche 1 bis 3, wobei der Schweißabschnitt (W) nicht mit dem in Längsrichtung gelegenen Endabschnitt (310) der zweiten Elektrode (300) überlappt.

7. Jelly-Roll-Elektrodenanordnung (1000) nach einem der Ansprüche 1 bis 6, wobei eine Vielzahl von Schweißabschnitten (W) den ersten Elektrodenstromkollektor (101) und den Unterbrechungsverhinderungsabschnitt (40) elektrisch verbindet, und wobei der in Längsrichtung gelegene Endabschnitt (310) der zweiten Elektrode (300) zwischen der Vielzahl von Schweißabschnitten (W) angeordnet ist.

8. Jelly-Roll-Elektrodenanordnung (1000) nach einem der Ansprüche 1 bis 6, wobei eine Vielzahl von Schweißabschnitten (W) den ersten Elektrodenstromkollektor (101) und den Unterbrechungsverhinderungsabschnitt (40) elektrisch verbindet, und wobei die Vielzahl von Schweißabschnitten (W) so ausgebildet ist, dass sie symmetrisch zueinander sind.

9. Jelly-Roll-Elektrodenanordnung (1000) nach einem der Ansprüche 1 bis 6, wobei der Schweißabschnitt (W) an einer in Längsrichtung gelegenen Position ausgebildet ist, an der die erste Elektrodenaktivmaterialschicht (103) auf der Oberfläche des ersten Elektrodenstromkollektors (101), die dem in Längsrichtung gelegenen Endabschnitt (310) der zweiten Elektrode (300) zugewandt ist, bereitgestellt ist.

10. Jelly-Roll-Elektrodenanordnung (1000) nach einem der Ansprüche 1 bis 6, wobei der Schweißabschnitt (W) an einer in Längsrichtung gelegenen Position ausgebildet ist, an der die erste Elektrodenaktivmaterialschicht (103) nicht auf der Oberfläche des ersten Elektrodenstromkollektors (101), die dem in Längsrichtung gelegenen Endabschnitt (310) der zweiten Elektrode (300) zugewandt ist, bereitgestellt ist.

11. Jelly-Roll-Elektrodenanordnung (1000) nach einem der Ansprüche 1 bis 10, wobei sich die erste Elektrode (100, 100') länger in der in Längsrichtung gelegenen Richtung erstreckt als der in Längsrichtung gelegene Endabschnitt (310) der zweiten Elektrode (300) und zusätzlich auf einer Außenseite der Elektrodenanordnung (1000) gewickelt ist.

12. Jelly-Roll-Elektrodenanordnung (1000) nach einem der Ansprüche 1 bis 11, wobei der in Längsrichtung gelegene Endabschnitt (310) der zweiten Elektrode (300) derart ausgebildet ist, dass der zweite Elektrodenstromkollektor (301) und die zweite Elektrodenaktivmaterialschicht (302, 303) den in Längsrichtung gelegenen Endabschnitt an der gleichen Position bilden.

13. Jelly-Roll-Elektrodenanordnung (1000) nach einem der Ansprüche 1 bis 12, wobei die erste Elektrode (100, 100') eine negative Elektrode ist und die zweite Elektrode (300) eine positive Elektrode ist.

14. Sekundärbatterie, umfassend:
die Jelly-Roll-Elektrodenanordnung (1000) nach einem der Ansprüche 1 bis 13; und
ein Batteriegehäuse zum Aufnehmen der Jelly-Roll-Elektrodenanordnung (1000).

15. Sekundärbatterie nach Anspruch 14, wobei das Batteriegehäuse eine zylindrische Form aufweist.

## Revendications

1. Ensemble d'électrodes du type « Jelly-roll » (1000) dans lequel une première électrode (100, 100'), un séparateur (20, 20'), et une deuxième électrode (300) sont empilés et enroulés,
la deuxième électrode (300) comprenant un collecteur de courant de deuxième électrode (301) ; et une couche de matière active de deuxième électrode (302, 303) agencée sur au moins une surface du collecteur de courant de deuxième électrode (301),
la première électrode (100, 100') comprenant un collecteur de courant de première électrode (101) ; une couche de matière active de première électrode (102, 103) agencée sur au moins une surface du collecteur de courant de première électrode (101) ;
une partie anti-débranchement (40) agencée sur une surface du collecteur de courant de première électrode (101) en face d'une surface faisant face à une partie terminale longitudinale (310) de la deuxième électrode (300) ; et une partie de soudure (W) connectant électriquement le collecteur de courant de première électrode (101) et la partie anti-débranchement (40), et
les deux parties terminales longitudinales de la partie anti-débranchement (40) ne coïncidant pas avec la partie terminale longitudinale (310) de la deuxième électrode (300),
la première électrode (100, 100') comprenant en outre une languette de première électrode (50) agencée sur une partie terminale longitudinale de la première électrode (100, 100'),
**caractérisé en ce que**
la partie anti-débranchement (40) étant agencée entre une partie terminale longitudinale de la couche de matière active de première électrode (102, 103) et la languette de première électrode (50), et
la languette de première électrode (50) étant agencée sur la surface du collecteur de courant de première électrode (101) face à la partie terminale longitudinale (310) de la deuxième électrode (300).

2. Ensemble d'électrodes du type « Jelly-roll » (1000) selon la revendication 1, la partie anti-débranchement (40) étant réalisée avec le même matériau que celui du collecteur de courant de première électrode (101).

3. Ensemble d'électrodes du type « Jelly-roll » (1000) selon la revendication 1, la partie terminale longitudinale (310) de la deuxième électrode (300) étant située entre les deux parties terminales longitudinales de la partie anti-débranchement (40).

4. Ensemble d'électrodes du type « Jelly-roll » (1000) selon une des revendications 1 à 3, la partie anti-débranchement (40) étant agencée entre une partie terminale longitudinale de la couche de matière active de première électrode (103) agencée sur la surface du collecteur de courant de première électrode (101) en face de la surface faisant face à la partie terminale longitudinale (310) de la deuxième électrode (300) et une languette de première électrode (50) agencée sur la surface du collecteur de courant de première électrode (101) en face de la surface faisant face à la partie terminale longitudinale (310) de la deuxième électrode (300).

5. Ensemble d'électrodes du type « Jelly-roll » (1000) selon une des revendications 1 à 3, une longueur (L2), dans le sens de l'axe d'enroulement, de la partie anti-débranchement (40) mesurant 50% ou plus et 100% ou moins en fonction d'une longueur, dans le sens de l'axe d'enroulement, du collecteur de courant de première électrode (101).

6. Ensemble d'électrodes du type « Jelly-roll » (1000) selon une des revendications 1 à 3, la partie de soudure (W) ne chevauchant pas la partie terminale longitudinale (310) de la deuxième électrode (300).

7. Ensemble d'électrodes du type « Jelly-roll » (1000) selon une des revendications 1 à 6, une pluralité de parties de soudure (W) connectant électriquement le collecteur de courant de première électrode (101) et la partie anti-débranchement (40), et
la partie terminale longitudinale (310) de la deuxième électrode (300) étant située entre la pluralité de parties de soudure (W).

8. Ensemble d'électrodes du type « Jelly-roll » (1000) selon une des revendications 1 à 6, une pluralité de parties de soudure (W) connectant électriquement le collecteur de courant de première électrode (101) et la partie anti-débranchement (40), et
la pluralité de parties de soudure (W) étant formées de sorte qu'elles soient symétriques entre elles.

9. Ensemble d'électrodes du type « Jelly-roll » (1000) selon une des revendications 1 à 6, la partie de soudure (W) étant formée dans une position longitudinale dans laquelle la couche de matière active de première électrode (103) est agencée sur la surface du collecteur de courant de première électrode (101) faisant face à la partie terminale longitudinale (310) de la deuxième électrode (300).

10. Ensemble d'électrodes du type « Jelly-roll » (1000) selon une des revendications 1 à 6, la partie de soudure (W) étant formée dans une position longitudinale dans laquelle la couche de matière active de première électrode (103) n'est pas agencée sur la surface du collecteur de courant de première électrode (101) faisant face à la partie terminale longitudinale (310) de la deuxième électrode (300).

11. Ensemble d'électrodes du type « Jelly-roll » (1000) selon une des revendications 1 à 10, la première électrode (100, 100') s'étendant sur une longueur majeure dans le sens longitudinal que la partie terminale longitudinale (310) de la deuxième électrode (300), et étant, en outre, enroulée sur un extérieur de l'ensemble d'électrodes (1000).

12. Ensemble d'électrodes du type « Jelly-roll » (1000) selon une des revendications 1 à 11, la partie terminale longitudinale (310) de la deuxième électrode (300) étant telle que le collecteur de courant de deuxième électrode (301) et la couche de matière active de deuxième électrode (302, 303) forment la partie terminale longitudinale sur la même position.

13. Ensemble d'électrodes du type « Jelly-roll » (1000) selon une des revendications 1 à 12, la première électrode (100, 100') étant une électrode négative, et la deuxième électrode (300) étant une électrode positive.

14. Batterie secondaire comprenant :
l'ensemble d'électrodes du type « Jelly-roll » (1000) selon une des revendications 1 à 13 ; et
un boîtier de batterie contenant l'ensemble d'électrodes du type « Jelly-roll » (1000).

15. Batterie secondaire selon la revendication 14, le boîtier de batterie ayant une forme cylindrique.
